(19) Europäisches Patentamt

European Patent Office

Office européen des brevets

(11) **EP 0 560 643 B1**

(12) **FASCICULE DE BREVET EUROPEEN**

(45) Date de publication et mention de la délivrance du brevet:
**07.02.1996 Bulletin 1996/06**

(51) Int. Cl.⁶: **B29C 37/00**, B29C 45/53

(21) Numéro de dépôt: **93400403.7**

(22) Date de dépôt: **18.02.1993**

(54) **Procédé et dispositif pour faire pénétrer un matériau de revêtement sous haute pression à l'intérieur d'un moule**

Verfahren und Vorrichtung zur Hochdruck-IMC-Beschichtung

Process and apparatus for high pressure in-mould coating

(84) Etats contractants désignés:
**DE ES GB IT**

(30) Priorité: **11.03.1992 FR 9202903**

(43) Date de publication de la demande:
**15.09.1993 Bulletin 1993/37**

(73) Titulaires:
- **AUTOMOBILES PEUGEOT
  F-75116 Paris (FR)**
- **AUTOMOBILES CITROEN
  F-92200 Neuilly sur Seine (FR)**
- **GETRASUR
  F-77220 Presles en Brie (FR)**

(72) Inventeurs:
- **Marot, Guy
  F-59390 Lys lez Lannoy (FR)**
- **Gumery, Xavier
  F-60300 Senlis (FR)**
- **Rey, Albin
  F-92210 Saint Cloud (FR)**

(74) Mandataire: **Pinchon, Odile
  F-92250 La Garenne Colombes (FR)**

(56) Documents cités:
EP-A- 0 113 222          EP-A- 0 197 496
FR-A- 1 206 296          US-A- 4 076 788
US-A- 4 720 364          US-A- 5 011 399

- **PATENT ABSTRACTS OF JAPAN vol. 9, no. 67 (M-366)(1790) 27 Mars 1985 & JP-A-59 199 226 (BRIGESTONE K.K.) 12 Novembre 1984**

## Description

La présente invention concerne un procédé selon le préambule de la revendication 1 pour faire pénétrer un matériau de revêtement sous haute pression à l'intérieur d'un moule, ainsi qu'un dispositif selon le préambule de la revendication 8 utilisable pour la mise oeuvre de ce procédé.

Un tel procédé et une tel dispositif sont décrits dans le US-A-4 668 460.

L'invention s'applique plus particulièrement à un revêtement d'apprêt ou de finition formé in situ sur une pièce moulée, c'est-à-dire à l'intérieur de son moule et avant d'écarter les éléments du moule et d'en extraire la pièce, tout comme le procédé décrit dans le US-A-4 668 460. Une pression élevée (plusieurs centaines de bars) est nécessaire pour faire pénétrer le matériau du revêtement entre le moule et la pièce et assurer une répartition régulière du revêtement à la surface de la pièce. Le matériau pénètre dans le moule par l'intermédiaire d'une chambre cylindrique dans laquelle coulisse une tige formant obturateur. Lorsque la tige est rétractée, la chambre communique avec un circuit d'injection comprenant des pompes délivrant le matériau à la haute pression désirée. Un inconvénient de cette technique est que, sauf à limiter les pressions utilisables, on doit donner à la chambre et au circuit d'injection une structure très robuste et donc coûteuse.

Le US-A-4 668 460 indique que la technique ci-dessus est utilisable pour appliquer un matériau de revêtement constitué par un mélange de deux composants réactifs ou plus. Les composants préalablement mélangés sont injectés par l'intermédiaire du même circuit d'injection. Cependant, pour gagner du temps dans l'exécution du procédé et donc améliorer la productivité de l'équipement, il serait souhaitable de pouvoir réaliser le mélange des composants en même temps que l'injection.

On connaît certes une autre technique dans laquelle une tête de mélange débouche directement vers l'intérieur du moule pour mélanger et injecter simultanément les composants. Mais la tête doit nécessairement comporter des orifices de petite section pour garantir un mélange intime des composants, ce qui limite les pressions utilisables en pratique. En outre, cette seconde technique nécessite de dédoubler le circuit d'injection délivrant la haute pression.

Un but principal de la présente invention est de proposer un procédé et un dispositif qui remédie aux inconvénients ci-dessus et qui permette d'utiliser des pressions élevées pour faire pénétrer le matériau de revêtement dans le moule sans augmenter sensiblement la complexité ou le coût de l'équipement.

Un autre but de l'invention est que le procédé soit applicable de façon simple dans le cas d'un matériau de revêtement obtenu à partir de plusieurs composants.

L'invention propose ainsi un procédé pour faire pénétrer un matériau de revêtement sous haute pression à l'intérieur d'un moule, dans lequel on utilise une chambre ayant une extrémité ouverte vers l'intérieur du moule et un conduit d'injection débouchant dans la chambre, caractérisé par la succession des étapes suivantes :

- déplacement d'un piston mobile dans la chambre depuis une première position dans laquelle le piston obture l'extrémité ouverte de la chambre jusqu'à une seconde position au-delà du conduit d'injection relativement à l'extrémité ouverte de la chambre ;
- injection du matériau de revêtement dans la chambre par l'intermédiaire du conduit d'injection sous une première pression ; et
- déplacement du piston vers ladite première position en lui appliquant une force correspondant, à l'intérieur de la chambre, à une seconde pression supérieure à ladite première pression.

Ainsi, seuls la chambre et le piston nécessitent d'être conçus pour supporter la seconde pression appliquée pour faire pénétrer le matériau dans le moule. En amont de la chambre, les pressions exercées sont moins élevées et l'équipement correspondant peut donc être plus simple et plus économique. En outre, en réduisant le nombre de zones exposées à la plus haute pression, on améliore les conditions de sécurité au voisinage de l'installation.

Dans une version préférée du procédé, dans laquelle le matériau de revêtement est constitué par un mélange d'au moins deux composants, on effectue le mélange des deux composants pendant l'étape d'injection en faisant converger plusieurs flux contenant respectivement les composants sous ladite première pression.

Le mélange et l'injection simultanés des composants permet d'exécuter le procédé en un temps relativement court. On peut alors régler la première pression pour obtenir un mélange homogène des composants réactifs dans des conditions optimales, tandis que la seconde pression est déterminée pour obtenir la meilleure répartition du matériau dans le moule après le mélange.

Le second aspect de l'invention vise un dispositif pour faire pénétrer un matériau de revêtement sous haute pression à l'intérieur d'un moule, comprenant une chambre ayant une extrémité ouverte vers l'intérieur du moule et des moyens d'injection pour injecter le matériau de revêtement dans la chambre, ces moyens d'injection incluant un conduit d'injection débouchant dans la chambre, caractérisé en ce qu'il comprend en outre un piston mobile dans la chambre entre une première position dans laquelle le piston obture l'extrémité ouverte de la chambre et une seconde position au-delà du conduit d'injection relativement à l'extrémité ouverte de la chambre, en ce que les moyens d'injection sont adaptés pour injecter le matériau de revêtement dans la chambre sous une première pression, et en ce que des moyens d'actionnement du piston sont prévus pour déplacer le piston dans le sens allant de ladite seconde position à ladite première position avec une force correspondant, à l'intérieur de la chambre, à une seconde pression supérieure à ladite première pression.

Ce dispositif est conçu pour la mise en oeuvre du procédé exposé ci-dessus.

D'autres particularités et avantages de la présente invention apparaîtront dans la description ci-après d'un exemple de réalisation préféré et non limitatif, lue conjointement aux dessins annexés, dans lesquels :

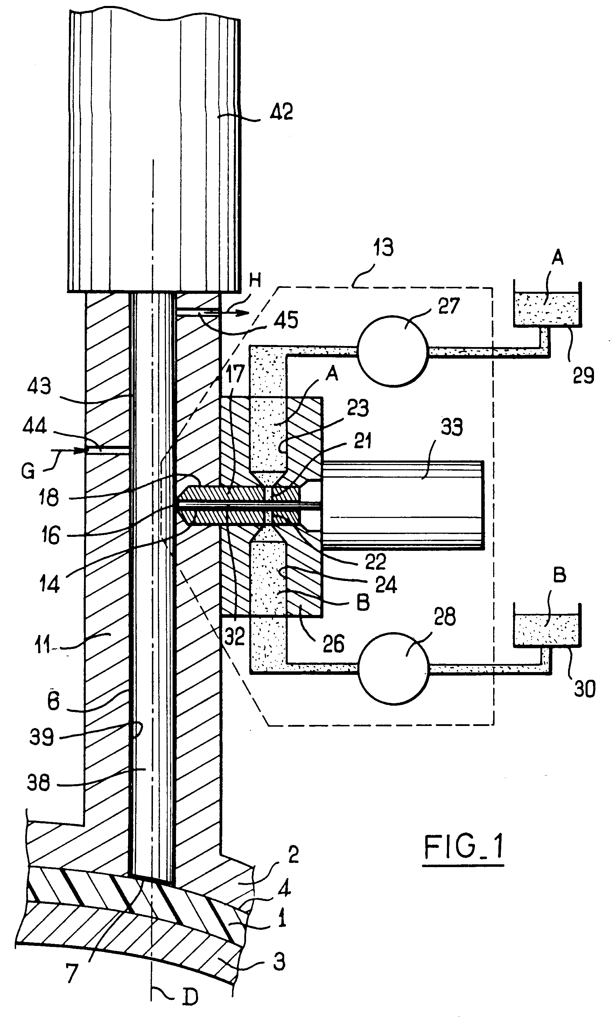

-       les figures 1 à 4 sont des vues schématiques en coupe d'un dispositif selon l'invention, représenté à différents stades du procédé selon l'invention.

Le dispositif représenté aux figures 1 à 4 sert à faire pénétrer un matériau de revêtement à l'intérieur d'un moule 2, 3 dans lequel une pièce 1 a préalablement été formée. Le moule se compose de deux éléments 2, 3 définissant entre eux une cavité. Pour réaliser la pièce 1 et la préparer à l'application du revêtement, on place la matière thermodurcissable de la pièce à mouler dans la cavité du moule, on appuie les éléments de moule 2, 3 l'un vers l'autre pour mettre en forme la pièce 1, puis on applique un traitement thermique connu à la pièce 1 pour la faire durcir au moins partiellement et pour rendre sa surface 4 réceptive au revêtement à appliquer.

Comme exposé dans le US-A-4 668 460, le revêtement est appliqué sur la pièce 1 en faisant pénétrer le matériau du revêtement sous haute pression (typiquement plusieurs centaines de bars) à l'intérieur du moule et sans écarter préalablement les éléments de moule 2, 3. Cette opération est exécutée en mettant en oeuvre la présente invention.

Le matériau de revêtement utilisé, par exemple destiné à former une couche d'apprêt ou de peinture sur une pièce de carrosserie, peut être constitué par une substance unique ou par un mélange de plusieurs composants réactifs. Dans l'exemple préféré décrit ci-après, le matériau de revêtement C est constitué par un mélange de deux composants A, B.

Le dispositif selon l'invention comprend une chambre 6 qui dans l'exemple représenté, est constituée par un canal cylindrique d'axe D formé dans l'élément de moule supérieur 2. La chambre 6 a une extrémité inférieure 7 ouverte vers la cavité formée à l'intérieur du moule.

Le dispositif selon l'invention comprend des moyens d'injection, indiqués globalement par la référence numérique 13 à la figure 1, pour injecter le matériau du revêtement dans la chambre 6. Ces moyens d'injection 13 comprennent un conduit d'injection cylindrique 14, transversal à l'axe D de la chambre, ayant une extrémité 16 ouverte vers l'intérieur de la chambre 6. Le conduit d'injection 14 est formé dans une pièce cylindrique 17 dont la partie avant est installée de manière étanche dans une ouverture 18 ménagée dans la paroi 11 de la chambre 6. En arrière de la paroi 11, cette pièce cylindrique 17 comporte deux orifices 21, 22 diamétralement opposés qui débouchent dans le conduit d'injection 14. Du côté opposé au conduit d'injection 14, chaque orifice 21, 22 communique avec une cavité respective 23, 24 formée dans un élément 26. L'élément 26 est monté de manière étanche autour de la partie arrière de la pièce cylindrique 17, et fixé par des moyens non représentés à la paroi 11 de la chambre 6.

Les moyens d'injection 13 comprennent en outre des moyens de pompage comportant, pour chaque composant A, B du matériau de revêtement, une pompe doseuse 27, 28 dont l'entrée est reliée à un réservoir 29, 30 dudit composant, et dont la sortie est reliée à une cavité respective 23, 24 de l'élément 26 et à l'orifice correspondant 21, 22. Les pompes doseuses utilisées 27, 28 sont adaptées pour délivrer chaque composant A, B à travers l'orifice correspondant 21, 22 sous une première pression prédéterminée PO. La pression PO est par exemple de l'ordre de 15 MPa (150 bars).

Les moyens d'injection 13 comprennent également des moyens d'obturation du conduit d'injection, comportant une aiguille 32 coulissant dans le conduit d'injection 14 et un actionneur tel qu'un vérin hydraulique 33 relié à l'aiguille 32. L'aiguille 32 est montée dans le conduit 14 avec un jeu sensiblement nul de façon à réaliser une étanchéité par simple contact entre la périphérie de l'aiguille 32 et la paroi du conduit 14.

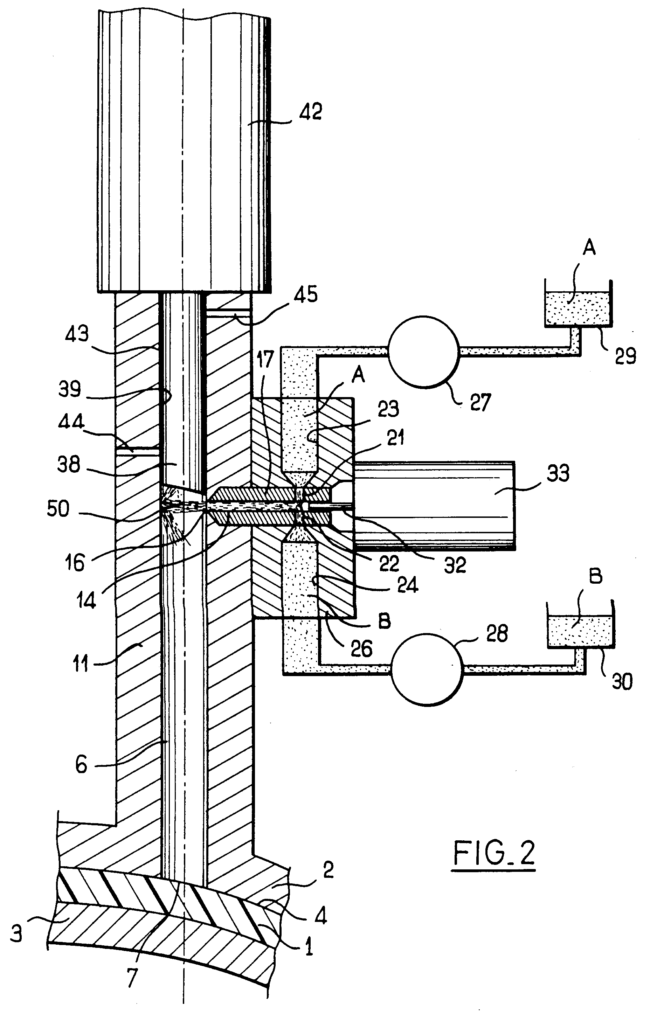

L'aiguille 32 est mobile dans le conduit d'injection 14 entre une position d'obturation dans laquelle elle obture à la fois l'extrémité 16 du conduit 14 ouverte vers la chambre 6 et les deux orifices 21, 22 (figures 1, 3 et 4), et une position de rétractation au-delà des orifices 21, 22 relativement à l'extrémité ouverte 16 (figure 2). Le vérin 33 est choisi de façon qu'il puisse commander le déplacement de l'aiguille 32 dans les deux sens entre ces deux positions avec une force F1 suffisante pour vaincre la pression PO s'exerçant au niveau des orifices 21, 22. Le vérin 33 peut par exemple actionner l'aiguille 32 avec une force $F1 = P1 \times S1$ correspondant, à l'intérieur du conduit d'injection 14, à une pression P1 de l'ordre de 20 MPa (200 bars) supérieure à la pression PO, S1 désignant l'aire de la section transversale intérieure du conduit 14.

Un piston cylindrique 38 est monté coulissant parallèlement à l'axe D dans la chambre 6. On dispose la chambre 6. On dispose la chambre 6 et le piston 38 de façon que la direction D de coulissement du piston soit sensiblement verticale, avec l'extrémité 7 de la chambre 6 dirigée vers le bas. Le piston 38 a une section transversale extérieure sensiblement identique à la section transversale intérieure de la chambre 6. Il n'y a qu'un jeu de l'ordre de 1 ou 2 microns entre la périphérie 39 du piston 38 et la paroi 11 de la chambre 6, ce qui permet de réaliser une étanchéité par simple contact autour du piston 38 mobile dans la chambre 6.

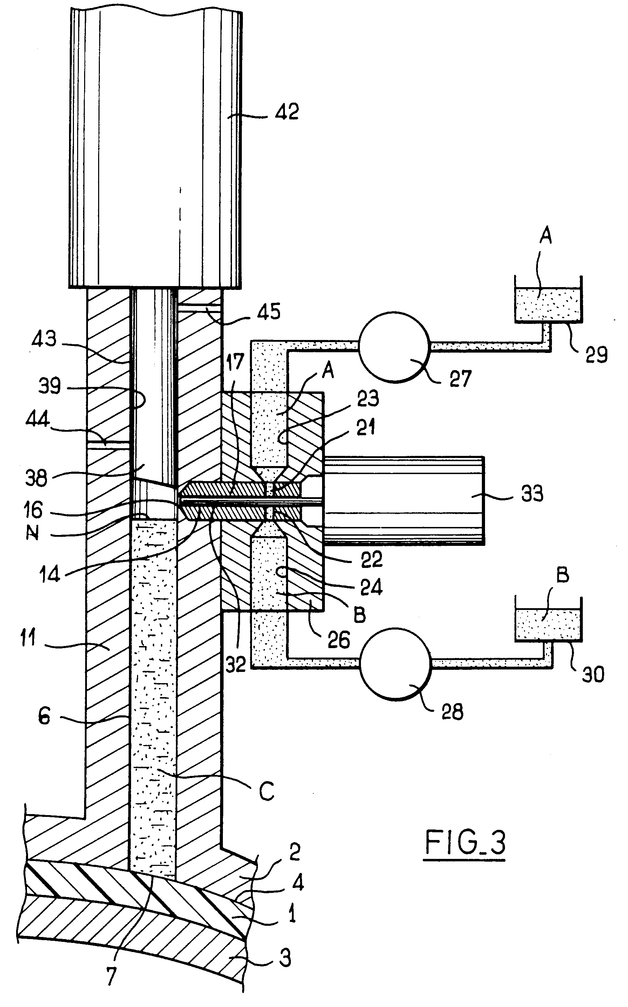

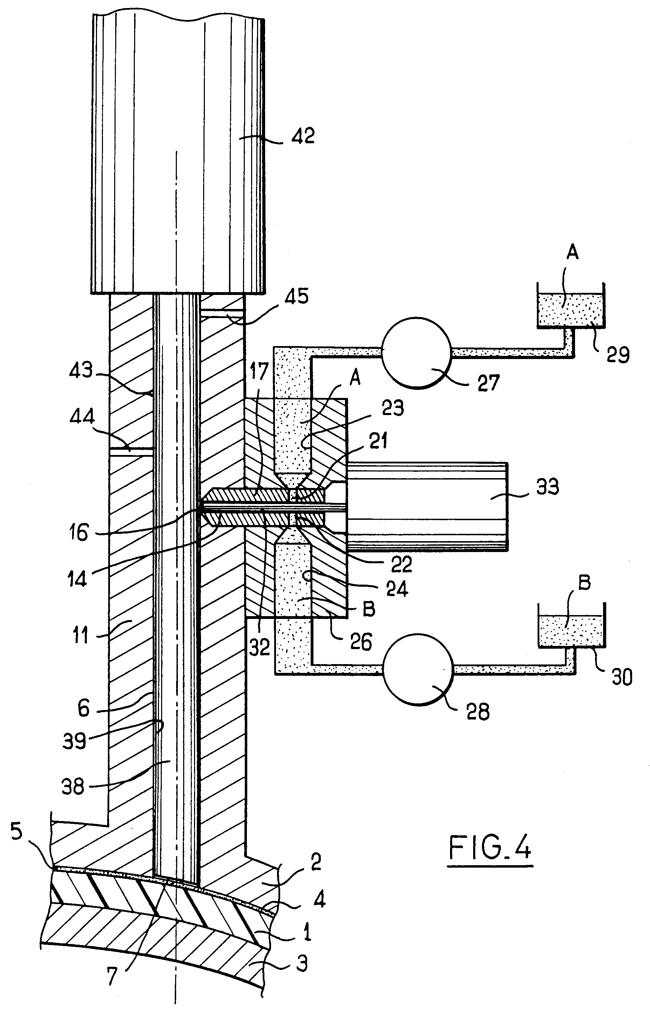

Le piston 38 est mobile dans la chambre entre une première position dans laquelle il obture l'extrémité 7 de la chambre 6 ouverte vers l'intérieur du moule (position inférieure représentée aux figures 1 et 4), et une seconde position au-delà du conduit d'injection 14 relativement à l'extrémité ouverte 7 de la chambre (position supérieure rétractée représentée aux figures 2 et 3).

Des moyens d'actionnement tels qu'un vérin hydraulique 42 sont reliés au piston 38 pour commander le déplacement du piston 38 dans les deux sens entre ces deux positions. Dans le sens allant de la position supérieure à la position inférieure, le vérin 42 peut pousser le piston 38 avec une force F2 = P2 x S2 correspondant à l'intérieur de la chambre 6, à une seconde pression prédéterminée P2 égale à la haute pression désirée pour faire pénétrer le matériau de revêtement à l'intérieur du moule, S2 désignant l'aire de la section transversale intérieure de la chambre 6. Cette seconde pression P2 est supérieure à la première pression P0 sous laquelle les composants A, B sont injectés dans la chambre 6. La seconde pression P2 est par exemple de l'ordre de 70 MPa (700 bars).

Au-dessus du conduit d'injection 14, c'est-à-dire audelà de ce conduit relativement à l'extrémité ouverte 7 de la chambre, la chambre 6 se prolonge par un tronçon de canal cylindrique coaxial 43 ayant sensiblement la même section transversale intérieure que la chambre 6. Il existe toutefois entre la paroi du tronçon de canal 43 et la périphérie 39 du piston un jeu légèrement supérieur à celui existant entre la paroi de la chambre 6 et la périphérie 39 du piston, ce qui permet d'appliquer un lubrifiant contre la périphérie 39 du piston pour favoriser son coulissement dans le canal composé du tronçon 43 et de la chambre 6. A cette fin, des orifices 44, 45 sont ménagés dans la paroi du tronçon de canal 43 pour faire circuler un lubrifiant sur la périphérie 39 du piston 38, comme l'indiquent schématiquement les flèches G, H à la figure 1.

On va maintenant décrire le fonctionnement du dispositif ci-dessus, ce qui fera apparaître les particularités du procédé selon l'invention.

Au moment où la pièce 1 a été mise en forme dans le moule 1 et où le traitement thermique se termine, le dispositif est dans l'état représenté à la figure 1. Le piston 38 est dans sa position inférieure et l'aiguille 32 dans sa position d'obturation.

On commande alors le vérin 42 pour qu'il déplace le piston 38 jusqu'à sa position supérieure, ce qui réalise le vide dans la chambre 6. Puis, on commande le vérin 33 pour qu'il déplace l'aiguille 32 jusqu'à sa position de rétractation. Le dispositif est alors dans l'état représenté à la figure 2. Le matériau du revêtement C est injecté dans la chambre 6 par l'intermédiaire du conduit d'injection 14 sous la première pression P0, comme l'illustre le jet 50 représenté à la figure 2.

Le mélange des deux composants A, B du matériau de revêtement a lieu pendant cette étape d'injection. L'aiguille d'obturation 32 ayant été rétractée, les pompes doseuses 27, 28 et les orifices 21, 22 forment deux flux opposés contenant respectivement les deux composants A, B sous la première pression P0. Ces deux flux sous pression convergent l'un vers l'autre et se heurtent à contre-courant dans une zone située dans le conduit d'injection 14, ce qui mélange les deux composants A, B. Le mélange ainsi formé est poussé par la pression P0 à travers le conduit 14 jusqu'à la chambre 6. Comme le conduit d'injection 14 est transversal à la direction D de coulissement du piston 38 dans la chambre 6, le jet de matériau sous pression 50 heurte sensiblement perpendiculairement la paroi intérieure de la chambre 6 en face du conduit d'injection 14, ce qui améliore encore le mélange des deux composants A, B.

Pendant l'étape d'injection du matériau de revêtement dans la chambre 6, les pompes doseuses 27, 28 mesurent les débits des composants injectés A, B. Lorsque les volumes désirés des deux composants A, B, ont été injectés, le vérin 33 est commandé pour pousser l'aiguille 32 jusqu'à sa position d'obturation du conduit d'injection 14. Ces volumes sont choisis de façon que le niveau N du matériau de revêtement C dans la chambre 6 à la fin de l'étape d'injection reste inférieur à celui du conduit d'injection 14 (figure 3). On évite ainsi tout risque de reflux du matériau C dans le conduit d'injection 14 lors du déplacement ultérieur du piston 38.

Le conduit 14 ayant été obturé, on commande le vérin 42 pour qu'il déplace le piston 42 vers sa position inférieure. La force F2 appliquée par le vérin 42 sur le piston 38 est réglée pour correspondre, à l'intérieur de la chambre 6, à la haute pression P2 désirée pour faire pénétrer le matériau de revêtement dans le moule.

A la fin du déplacement vers le bas du piston 38, le dispositif est dans l'état représenté à la figure 4. Le matériau a pénétré dans le moule et est venu former un revêtement 5 uniformément réparti à la surface 4 de la pièce 1.

Le procédé et le dispositif selon l'invention présentent l'avantage que seule la chambre 6 doit supporter la très haute pression P2 (de l'ordre de 700 bars) servant à faire pénétrer en force le matériau du revêtement entre la pièce 1 et le moule 2, 3. Les moyens d'injection 13 n'ont à supporter que des pressions P0 moindres (de l'ordre de 150 bars), contrairement aux moyens d'injection utilisés selon le US-A-4 668 460. On peut ainsi utiliser des éléments plus légers et plus économiques pour réaliser les moyens d'injection 13, ou encore augmenter les pressions de pénétration sans alourdir ou compliquer les moyens d'injection. En outre, les conditions de sécurité autour de l'installation sont améliorées.

Le mélange des composants A, B ayant lieu pendant leur injection dans la chambre 6, on réalise un gain de temps par rapport aux procédés connus dans lesquels une étape de mélange doit être effectuée au préalable, sans augmenter sensiblement le coût de l'équipement nécessaire. Le procédé selon l'invention améliore donc la productivité de l'investissement en équipement.

Bien qu'on ait décrit l'invention en référence à un exemple de réalisation préféré, on comprendra que cet exemple n'est pas limitatif et que diverses modifications peuvent lui être apportées sans sortir du cadre de l'invention tel que défini dans les revendications.

Ainsi, le nombre de composants du matériau de revêtement peut être supérieur à deux. On dispose alors un nombre correspondant d'orifices autour du conduit d'injection pour faire converger des flux contenant les différents composants. Le dispositif est également utilisable dans le cas d'un matériau monocomposant, en prévoyant un seul orifice débouchant dans le conduit d'injection.

**Revendications**

1. Procédé pour faire pénétrer un matériau de revêtement (C) sous haute pression à l'intérieur d'un moule (2, 3) dans lequel on utilise une chambre (6) ayant une extrémité (7) ouverte vers l'intérieur du moule et un conduit d'injection (14) débouchant dans la chambre (6), caractérisé par la succession des étapes suivantes :

   - déplacement d'un piston (38) mobile dans la chambre (6) depuis une première position dans laquelle le piston obture l'extrémité ouverte (7) de la chambre jusqu'à une seconde position au-delà du conduit d'injection (14) relativement à l'extrémité ouverte (7) de la chambre ;
   - injection du matériau de revêtement (C) dans la chambre (6) par l'intermédiaire du conduit d'injection (14) sous une première pression (PO) ; et
   - déplacement du piston (38) vers ladite première position en lui appliquant une force (F2) correspondant, à l'intérieur de la chambre (6), à une seconde pression (P2) supérieure à ladite première pression (P0).

2. Procédé conforme à la revendication 1, caractérisé en ce que ladite première pression (P0) est de l'ordre de 15 MPa (150 bars), et en ce que ladite seconde pression (P2) est de l'ordre de 70 MPa (700 bars).

3. Procédé conforme à l'une des revendications 1 ou 2, caractérisé en ce que, avant de déplacer le piston (38) vers ladite première position, on obture le conduit d'injection (14).

4. Procédé conforme à l'une des revendications 1 à 3, caractérisé en ce qu'on dispose la chambre (6) et le piston (38) de façon que la direction de coulissement (D) du piston soit sensiblement verticale, avec l'extrémité ouverte (7) de la chambre dirigée vers le bas, et en ce que, à l'étape d'injection, on introduit du matériau de revêtement (C) dans la chambre (6) jusqu'à un niveau (N) inférieur à celui du conduit d'injection (14).

5. Procédé conforme à l'une des revendications 1 à 4, dans lequel le matériau de revêtement (C) est constitué par un mélange d'au moins deux composants (A, B), caractérisé en ce qu'on effectue le mélange des deux composants pendant l'étape d'injection en faisant converger plusieurs flux contenant respectivement les composants (A, B) du matériau (C), sous ladite première pression (P0).

6. Procédé conforme à la revendication 5, caractérisé en ce qu'on fait converger lesdits flux dans une zone située à l'intérieur du conduit d'injection (14).

7. Procédé conforme à l'une des revendications 5 ou 6, caractérisé en ce qu'on dispose le conduit d'injection (14) transversalement à la direction de coulissement (D) du piston (38) de façon que, lors de l'étape d'injection, le matériau de revêtement (C) heurte sensiblement perpendiculairement une paroi intérieure de la chambre (6) en face du conduit d'injection (14).

8. Dispositif pour faire pénétrer un matériau de revêtement (C) sous haute pression à l'intérieur d'un moule (2, 3), comprenant une chambre (6) ayant une extrémité (7) ouverte vers l'intérieur du moule et des moyens d'injection (13) pour injecter le matériau de revêtement (C) dans la chambre (6), ces moyens d'injection incluant un conduit d'injection (14) débouchant dans la chambre (6), caractérisé en ce qu'il comprend en outre un piston (38) mobile dans la chambre (6) entre une première position dans laquelle piston obture l'extrémité ouverte (7) de la chambre et une seconde position au-delà du conduit d'injection (14) relativement à l'extrémité ouverte (7) de la chambre, en ce que les moyens d'injection (13) sont adaptés pour injecter le matériau de revêtement (C) dans la chambre (6) sous une première pression (P0), et en ce que des moyens d'actionnement du piston (42) sont prévus pour déplacer le piston (38) dans le sens allant de ladite seconde position à ladite première position avec une force (F2) correspondant, à l'intérieur de la chambre (6), à une seconde pression (P2) supérieure à ladite première pression (PO).

9. Dispositif conforme à la revendication 8, caractérisé en ce que la section transversale extérieure du piston (38) est sensiblement identique à la section transversale intérieure de la chambre (6), de façon à réaliser une étanchéité par contact autour du piston (38) mobile dans la chambre (6).

10. Dispositif conforme à la revendication 9, caractérisé en ce que la chambre (6) se prolonge, au-delà du conduit d'injection (14) relativement à l'extrémité ouverte (7) de la chambre, par un tronçon de canal (43) ayant sensiblement la même section transversale intérieure que la chambre (6), et en ce que des moyens (44, 45) sont prévus pour appliquer un lubrifiant sur la périphérie (39) du piston (38) dans ledit tronçon de canal (43).

11. Dispositif conforme à l'une des revendications 8 à 10, caractérisé en ce que les moyens d'injection (13) comprennent des moyens d'obturation (32, 33) du conduit d'injection (14).

**12.** Dispositif conforme à la revendication 11, caractérisé en ce que les moyens d'obturation du conduit d'injection comprennent une aiguille (32) coulissant avec un jeu sensiblement nul dans le conduit d'injection (14), et un actionneur (33) commandant le déplacement de l'aiguille (32).

**13.** Dispositif conforme à l'une des revendications 8 à 12, pour faire pénétrer à l'intérieur du moule un matériau de revêtement (C) constitué par un mélange d'au moins deux composants (A, B), caractérisé en ce que les moyens d'injection (13) comprennent des moyens (21, 27 ; 22, 28), pour former plusieurs flux convergents contenant respectivement les composants (A, B) du matériau (C) sous ladite première pression (PO).

**14.** Dispositif conforme à la revendication 13, caractérisé en ce que les moyens pour former lesdits flux convergents comprennent des orifices (21, 22) débouchant dans le conduit d'injection (14), et des moyens de pompage (27, 28) pour délivrer les composants (A, B) sous ladite première pression (PO) à travers les orifices (21, 22).

**15.** Dispositif conforme à la revendication 14, caractérisé en ce que les moyens de pompage comprennent, pour chaque composant (A, B), une pompe doseuse (27, 28) reliée à l'orifice correspondant (21, 22).

**16.** Dispositif conforme à l'une des revendications 14 ou 15, caractérisé en ce que les moyens d'injection (13) comprennent des moyens d'obturation du conduit d'injection comprenant une aiguille (32) coulissant avec un jeu sensiblement nul dans le conduit d'injection (14) entre une position dans laquelle l'aiguille (32) obture à la fois les orifices (21, 22) et une extrémité (16) du conduit d'injection ouverte vers la chambre (6), et une position au-delà des orifices (21, 22) relativement à l'extrémité ouverte (16) du conduit d'injection.

**Claims**

**1.** A process for causing a coating material (C) to penetrate at high pressure inside a mould (2, 3) in which use is made of a chamber (6) having one end (7) open to the inside of the mould and an injection conduit (14) emerging into the chamber (6), characterised by the succession of following stages:

- displacement of a piston (38) movable inside the chamber (6) from a first position in which the piston blocks the open end (7) of the chamber to a second position beyond the injection conduit (14) relative to the open end (7) of the chamber;

- injection of the coating material (C) into the chamber (6) via the injection conduit (14) at a first pressure (P0); and

- displacement of the piston (38) towards said first position by applying to it a force (F2) corresponding, inside the chamber (6), to a second pressure (P2) greater than said first pressure (PO).

**2.** A process according to Claim 1, characterised in that said first pressure (PO) is of the order of 15 MPa (1 50 bars), and in that said second pressure (P2) is of the order of 70 MPa (700 bars).

**3.** A process according to one of Claims 1 or 2, characterised in that, before displacing the piston (38) towards said first position, the injection conduit (14) is blocked.

**4.** A process according to one of Claims 1 to 3, characterised in that the chamber (6) and the piston (38) are positioned such that the sliding direction (D) of the piston is substantially vertical, with the open end (7) of the chamber pointing downwards, and in that, at the injection stage, the coating material (C) is introduced into the chamber (6) up to a level (N) lower than that of the injection conduit (14).

**5.** A process according to one of Claims 1 to 4, in which the coating material (C) is constituted by a mixture of at least two components (A, B), characterised in that the two components are mixed during the injection stage while causing several flows, containing respectively the components (A, B) of the material (C), to converge at said first pressure (PO).

**6.** A process according to Claim 5, characterised in that said flows are caused to converge in a zone located inside the injection conduit (14).

**7.** A process according to one of Claims 5 or 6, characterised in that the injection conduit (14) is arranged transversely to the sliding direction (D) of the piston (38) such that, at the injection stage, the coating material (C) hits an inner wall of the chamber (6) facing the injection conduit (14), substantially perpendicularly.

**8.** A device for causing a coating material (C) to penetrate at high pressure inside a mould (2, 3), comprising a chamber (6) having one end (7) open to the inside of the mould and injection means (13) for injecting the coating material (C) into the chamber (6), these injection means including an injection conduit (14) emerging into the chamber (6), characterised in that it further comprises a piston (38) movable inside the chamber (6) between a first position in which the piston blocks the open end (7) of the chamber and a second position beyond the injection conduit (14) relative to the open end (7) of the chamber, in that the injection means (13) are suitable for injecting the coating material (C) into the chamber (6) at a first pressure (PO), and in that means for actuating the piston (42) are provided for displacing the piston (38) in the direction from said second position towards said first position with a force (F2) corresponding, inside the chamber (6), to a second pressure (P2) greater than said first pressure (PO).

9. A device according to Claim 8, characterised in that the external cross section of the piston (38) is substantially identical to the internal cross section of the chamber (6), so as to produce a seal by contact around the piston (38), which is movable inside the chamber (6).

10. A device according to Claim 9, characterised in that the chamber (6) is extended, beyond the injection conduit (14) relative to the open end (7) of the chamber, by a channel section (43) having substantially the same internal cross section as the chamber (6), and in that means (44, 45) are provided for applying a lubricant to the periphery (39) of the piston (38) in said channel section (43).

11. A device according to one of Claims 8 to 10, characterised in that the injection means (13) comprise means (32, 33) for blocking the injection conduit (14).

12. A device according to Claim 11, characterised in that the means for blocking the injection conduit comprise a needle (32) sliding with substantially zero play inside the injection conduit (14), and an actuator (33) controlling the displacement of the needle (32).

13. A device according to one of Claims 8 to 12, for causing a coating material (C) to penetrate at high pressure inside a mould, said coating being constituted by a mixture of at least two components (A, B), characterised in that the injection means (13) comprise means (21, 27; 22, 28) for forming several convergent flows containing respectively the components (A, B) of the material (C) at said first pressure (PO).

14. A device according to Claim 13, characterised in that the means for forming said convergent flows comprise orifices (21, 22) emerging into the injection conduit (14), and pumping means (27, 28) for delivering the components (A, B) at said first pressure (PO) through the orifices (21,22).

15. A device according to Claim 14, characterised in that the pumping means comprise, for each component (A, B), a metering pump (27, 28) connected to the corresponding orifice (21, 22).

16. A device according to one of Claims 14 or 15, characterised in that the injection means (13) comprise means for blocking the injection conduit comprising a needle (32) sliding with substantially zero play inside the injection conduit (14) between a position in which the needle (32) simultaneously blocks the orifices (21, 22) and one end (16) of the injection conduit open to the chamber (6), and a position beyond the orifices (21, 22) relative to the open end (16) of the injection conduit.

**Patentansprüche**

1. Verfahren zum Einbringen eines Verkleidungsmaterials (C) unter hohem Druck in das Innere einer Form (2, 3), worin man eine Kammer (6) benutzt, die ein zum Inneren der Form hin offenes Ende (7) aufweist, sowie eine Einspritzleitung (14), die in die Kammer (6) einmündet, gekennzeichnet durch die Aufeinanderfolge der nachfolgenden Schritte:

- Verschieben eines beweglichen Kolbens (38) in der Kammer (6) aus einer ersten Lage, in welcher der Kolben das offene Ende (7) der Kammer verschließt, bis in eine zweite Lage jenseits der Einspritzleitung (14), auf das offene Ende (7) der Kammer bezogen;
- Einspritzen des Verkleidungsmaterials (C) in die Kammer (6) mittels der Einspritzleitung (14) unter einem ersten Druck (P0); und
- Verschieben des Kolbens (38) in die genannte erste Lage, indem man auf ihn eine Kraft (F2) aufbringt, die einem zweiten Druck (P2) im Inneren der Kammer (6) entspricht, der höher ist als der genannte erste Druck (PO).

2. Verfahren nach Anspruch 1, dadurch gekennzeichnet, daß der genannte erste Druck (PO) in der Größenordnung von 15 MPa (150 bar) liegt, und daß der genannte zweite Druck (P2) in der Größenordnung von 70 MPa (700 bar) liegt.

3. Verfahren nach einem der Ansprüche 1 oder 2, dadurch gekennzeichnet, daß man vor dem Verschieben des Kolbens (38) in die genannte erste Lage die Einspritzleitung (14) verschließt.

4. Verfahren nach einem der Ansprüche 1 bis 3, dadurch gekennzeichnet, daß man die Kammer (6) und den Kolben (38) derart anordnet, daß die Verschieberichtung (D) des Kolbens im wesentlichen vertikal ist, wobei das offene Ende (7) der Kammer nach unten gerichtet ist, und daß man beim Einspritzschritt Verkleidungsmaterial (C) in die Kammer (6) bis auf eine Höhe (N) einbringt, die niedriger liegt als die der Einspritzleitung (14).

5. Verfahren nach einem der Ansprüche 1 bis 4, worin das Verkleidungsmaterial (C) von einem Gemisch mindestens zweier Komponenten (A, B) gebildet ist, dadurch gekennzeichnet, daß man die Mischung der beiden Komponenten während des Einspritzschrittes bewirkt, indem man mehrere Ströme, die die jeweiligen Komponenten (A, B) des Materials (C) enthalten, unter dem genannten ersten Druck (PO) zusammenfließen läßt.

6. Verfahren nach Anspruch 5, dadurch gekennzeichnet, daß man die genannten Ströme in einer Zone zusammenfließen läßt, die im Inneren der Einspritzleitung (14) gelegen ist.

7. Verfahren nach einem der Ansprüche 5 oder 6, dadurch gekennzeichnet, daß man die Einspritzleitung (14) quer zur Verschieberichtung (D) des Kolbens (38) derart anordnet, daß während des Einspritzschrittes das Verkleidungsmaterial (C) im wesentlichen senkrecht auf eine Innenwand der Kammer (6) prallt, die der Einspritzleitung (14) zugewandt ist.

8. Vorrichtung zum Einbringen von Verkleidungsmaterial (C) unter hohem Druck in das Innere einer Form (2, 3), mit einer Kammer (6), die ein zur Innenseite der Form hin offenes Ende (7) aufweist, und mit Einspritzmitteln (13), um das Verkleidungsmaterial (C) in die Kammer (6) einzuspritzen, wobei diese Einspritzmittel eine Einspritzleitung (14) umfassen, die in die Kammer (6) einmündet, dadurch gekennzeichnet, daß sie außerdem einen Kolben (38) aufweist, der in der Kammer (6) zwischen einer ersten Lage, in welcher der genannte Kolben das offene Ende (7) der Kammer verschließt, und einer zweiten Lage jenseits der Einspritzleitung (14), auf das offene Ende (7) der Kammer bezogen, beweglich ist, daß die Einspritzmittel (13) zum Einspritzen des Verkleidungsmaterials (C) in die Kammer (6) unter einem ersten Druck (PO) eingerichtet sind, und daß Kolben-Betätigungsmittel (42) vorgesehen sind, um den Kolben (38) in der Richtung, die aus der genannten zweiten Lage in die genannte erste Lage verläuft, mit einer Kraft (F2) zu verschieben, die einem zweiten Druck (P2) im Inneren der Kammer (6) entspricht, der größer ist als der genannte erste Druck (PO).

9. Vorrichtung nach Anspruch 8, dadurch gekennzeichnet, daß der Außenquerschnitt des Kolbens (38) im wesentlichen identisch ist mit dem Innenquerschnitt der Kammer (6), so daß eine Berührungsabdichtung rund um den in der Kammer (6) beweglichen Kolben (38) hergestellt ist.

10. Vorrichtung nach Anspruch 9, dadurch gekennzeichnet, daß die Kammer (6) über die Einspritzleitung (14) hinaus, auf das offene Ende (7) der Kammer bezogen, um ein Kanalstück (43) verlängert ist, das im wesentlichen denselben Innenquerschnitt aufweist wie die Kammer (6), und daß Mittel (44, 45) vorgesehen sind, um ein Schmiermittel auf den Umfang (39) des Kolbens (38) im genannten Kanalstück (43) aufzubringen.

11. Vorrichtung nach einem der Ansprüche 8 bis 10, dadurch gekennzeichnet, daß die Einspritzmittel (13) Verschlußmittel (32, 33) für die Einspritzleitung (14) aufweisen.

12. Vorrichtung nach Anspruch 11, dadurch gekennzeichnet, daß die Verschlußmittel der Einspritzleitung eine Nadel (32) aufweisen, die mit einem Spiel, das im wesentlichen Null ist, in der Einspritzleitung (14) gleitet, sowie ein Betätigungsorgan (33), das die Verlagerung der Nadel (32) steuert.

13. Vorrichtung nach einem der Ansprüche 8 bis 12 zum Einbringen eines Verkleidungsmaterials (C) in das Innere einer Form, das aus einer Mischung aus mindestens zwei Komponenten (A, B) gebildet ist, dadurch gekennezichnet, daß die Einspritzmittel (13) Mittel (21, 27; 22, 28) aufweisen, um mehrere, unter dem genannten ersten Druck (PO) zusammenlaufende Flüsse zu bilden, die jeweils die Komponenten (A, B) des Materials (C) enthalten.

14. Vorrichtung nach Anspruch 13, dadurch gekennzeichnet, daß die Mittel zum Bilden der genannten, zusammenlaufenden Flüsse Öffnungen (21, 22) aufweisen, die in die Einspritzleitung (14) einmünden, sowie Pumpmittel (27, 28), um die Komponenten (A, B) unter dem genannten ersten Druck (PO) durch die Öffnungen (21, 22) hindurch zuzuführen.

15. Vorrichtung nach Anspruch 14, dadurch gekennzeichnet, daß die Pumpmittel für jede Komponente (A, B) eine Dosierpumpe (27, 28) aufweisen, die mit der entsprechenden Öffnung (21, 22) verbunden ist.

16. Vorrichtung nach einem der Ansprüche 15 oder 16, dadurch gekennzeichnet, daß die Einspritzmittel (13) Mittel zum Versperren der Einspritzleitung aufweisen, die eine Nadel (32) aufweisen, die mit einem Spiel, das im wesentlichen Null ist, in der Einspritzleitung (14) zwischen einer Lage, in welcher die genannte Nadel (32) gleichzeitig die Öffnungen (21, 22) und das eine Ende (16) der Einspritzleitung verschließt, das zur Kammer (6) hin offen ist, und einer Lage jenseits der Öffnungen (21, 22) gleitet, auf das offene Ende (6) der Einspritzleitung bezogen.

FIG_1

FIG. 2

FIG_3

FIG.4